# EUROPÄISCHE PATENTSCHRIFT

(11) **EP 0 584 467 B1**
(45) Veröffentlichungstag und Bekanntmachung des Hinweises auf die Patenterteilung: **10.09.1997**
(21) Anmeldenummer: 93108723.3
(22) Anmeldetag: 29.05.1993
(51) Int. Cl.: B29C 65/00, B29C 47/00, B29C 47/06

(54) **Verfahren zur kontinuierlichen Herstellung eines langgestreckten Hohlprofils aus thermoplastischem Kunststoff**
Method of continuously producing elongated hollow profiles made from thermoplastic material
Méthode de fabrication continue des profilés allongés et creux en matière thermoplastique

(30) Priorität: 26.08.1992 DE 4228336
(43) Veröffentlichungstag der Anmeldung: 02.03.1994
(73) Patentinhaber: Technoform Caprano + Brunnhofer oHG, 34277 Fuldabrück (DE)
(72) Erfinder: Brunnhofer, Erwin, W-3501 Fuldabrück 1 (DE)
(74) Vertreter: Honke, Manfred, Dr.-Ing.

(56) Entgegenhaltungen:
- DE-A- 3 530 039
- PATENT ABSTRACTS OF JAPAN vol. 5, no. 193 (M-101)(865) 9. Dezember 1981 & JP-A-56 115 237 (DENKI KAGAKU KOGYO K.K.)
- PV Bd. 19, Nr. 8, August 1968, DE Seiten 635 - 640 H. O. SCHIEDRUM 'profilwerkzeuge und -anlagen für das Extrudieren von thermoplastischen Kunststoffen'
- MODERN PLASTICS INTERNATIONAL. Bd. 8, Nr. 11, November 1978, LAUSANNE CH Seite 42 'dual-extrusion panel construction gets double value from PC sheet'
- PATENT ABSTRACTS OF JAPAN vol. 9, no. 51 (M-361)(1774) 6. März 1985 & JP-A-59 188 424 (MEIJI GOMU KASEI K.K.)

## Beschreibung

Die Erfindung betrifft ein Verfahren zur Herstellung eines langgestreckten Hohlprofils aus thermoplastischem Kunststoff mit über die Hohlprofillänge konstantem Hohlprofilquerschnitt. Derartige Hohlprofile sind in verschiedenen Ausführungsformen und für die verschiedensten Verwendungszwecke bekannt. Allgemein ist zu sagen, daß die üblichen langgestreckten Hohlprofile aus thermoplastischem Kunststoff einteilig und nahtlos ausgeformt werden. Sie werden entsprechend extrudiert, sei es im Wege der freien Extrusion, sei es mit Hilfe einer dem formgebenden, ungekühlten oder wenig gekühlten Werkzeug nachgeschalteten Kühl- und Kalibriereinrichtung. Haben die Hohlprofile einen komplexen Querschnitt, wie es beispielsweise bei Fensterprofilen der Fall ist, so sind die bekannten Maßnahmen aufwendig und die Qualität der Produkte ist der Kritik offen. Das gilt insbesondere, wenn die Wände und Stege eines solchen Hohlprofils unterschiedliche Wanddicken aufweisen und an die einzuhaltenden Toleranzen strenge Anforderungen gestellt werden. Man beobachtet im Profilquerschnitt häufig schrumpfungsbedingte Einfallsstellen u. dgl.

Allerdings ist es bekannt (DE-A-40 36 245), ein Kunststoffhohlprofil aus zwei Teilprofilen, nämlich aus zwei identischen Teilprofilen, zusammenzusetzen, wobei die Teilprofile formschlüssig und darüber hinaus im Bereich einer Stoßnaht durch Schweißen vereinigt sind. Die Teilprofile können auf beliebige Art und Weise hergestellt werden. Sie können gerade verlaufen oder auch gebogen sein, jedoch müssen insoweit erhebliche Toleranzen in Kauf genommen werden. Eine Anweisung, wie erreichbar ist, daß das langgestreckte Hohlprofil mit engen Toleranzen gerade oder mit vorgegebener Krümmung und/oder mit vorgegebener Torsion um die Hohlprofilachse verläuft, wird nicht gegeben. Die Praxis zeigt, daß im Rahmen der bekannten Verfahrensweise das langgestreckte Hohlprofil bei der Herstellung unkontrolliert verläuft und nach der Vereinigung der Teilprofile nachgerichtet werden muß. Auch die Oberflächenqualität, insbesondere die der Innenoberfläche, ist der Kritik offen. Im übrigen ist es bekannt, auf ein extrudiertes Hohlprofil aus thermoplastischem Kunststoff ein anderes Profil oder Profilleisten mit anderen physikalischen Eigenschaften aufzuschweißen (DE-U-90 90 014). Auch hier werden in werkstoffmäßiger Hinsicht und bezüglich der Herstellung der Hohlprofile keine besonderen Angaben gemacht, es wird nicht angegeben, wie zu verfahren ist, damit die Hohlprofile gerade oder mit vorgegebener Krümmung und/oder mit vorgegebener Torsion um die Hohlprofillängsachse verlaufen.

Der Erfindung liegt das technische Problem zugrunde, ein Verfahren anzugeben, mit dem ein langgestrecktes Hohlprofil aus thermoplastischem Kunststoff, welches in bezug auf die Außenmaße, aber auch in bezug auf die Innenmaße und die Profilkammern sehr genau und mit engen Toleranzen hergestellt werden kann, und zwar so, daß das Hohlprofil mit extrem geringen Toleranzen vollkommen gerade oder mit vorgegebener Krümmung und/oder mit vorgegebener Torsion um die Hohlprofilachse verläuft. Darüber hinaus soll sowohl die Qualität der Außenoberfläche als auch die der Innenoberfläche hohen Anforderungen genügen.

Zur Lösung dieses technischen Problems ist Gegenstand der Erfindung ein Verfahren zur kontinuierlichen Herstellung eines langgestreckten Hohlprofiles aus thermoplastischem Kunststoff mit über die Hohlprofillänge konstantem Hohlprofilquerschnitt:
a) das Hohlprofil wird aus zumindest zwei Teilprofilen, die über die Hohlprofillänge konstanten Teilprofilquerschnitt sowie einander zugeordnete und zueinander komplementäre Fügebereiche aufweisen, zusammengesetzt,
b) für die Herstellung der Teilprofile wird ein nach dem Kühldüsenextrusionsverfahren toleranzarm extrudierbarer Kunststoff verwendet,
c) das Kühldüsenextrusionsverfahren wird so geführt, daß die Teilprofile Teilprofilquerschnittstoleranzen in bezug auf alle Längenmaße der Teilprofilquerschnitte, angegeben in Millimeter, von unter plus/minus 0,2 % aufweisen,
d) die Teilprofile werden gleichzeitig mit Hilfe der Kühldüsenextrusion hergestellt sowie im Anschluß daran zum Hohlprofil gefügt und dabei oder danach in Längsrichtung des Hohlprofils sowie nach Maßgabe der beiden weiteren räumlichen Koordinaten gegeneinander durch Stoffschluß und/oder Adhäsion und/oder Formschluß unverschiebbar verbunden,
e) das durch den Verbund der Teilprofile hergestellte Hohlprofil wird einer Abzugseinrichtung zugeführt und mit dieser als ganzes abgezogen,
wobei die Lange der einzelnen Teilprofile durch Einflußnahme auf die Extrusionsgeschwindigkeit für die einzelnen Teilprofile bei der Kühldüsenextrusion so abgestimmt wird, daß ein langgestrecktes Hohlprofil gerade oder mit vorgegebener Krümmung und/oder mit vorgegebener Torsion um die Hohlprofillängsachse abgezogen wird, wobei die Abzugseinrichtung entsprechend eingerichtet wird. - Die angegebenen Teilprofilquerschnittstoleranzen liegen niedriger, als es bei extrudierten Profilen aus thermoplastischem Kunststoff die Regel ist (vgl. DIN 16941, Mai 1986), was mit der Kühldüsenextrusion unschwer einstellbar ist. Die Toleranz von 0,2 % liegt bei üblichen Hohlprofilen dem Zahlenwert nach bei 0,02 mm.

Im Rahmen des erfindungsgemäßen Verfahrens kann das Hohlprofil aus Teilprofilen unterschiedlichen oder gleichen Teilprofilquerschnittes zusammengesetzt werden, sogar und insbesondere aus Teilprofilen mit stark unterschiedlichen Wanddicken und unterschiedlichen Wanddicken in den Teilprofilen. Praktisch alle in der heutigen Anwendungstechnik üblichen Profilquerschnitte können auf diese Weise hergestellt werden. Die Hohlprofile können aus Teilprofilen aus dem gleichen Kunststoff zusammengesetzt werden. Gleicher Kunststoff meint dabei Kunststoffe gleicher stofflicher Zusammsetzung bei gleicher oder unterschiedlicher Füllung und/oder Bewehrung. Nach einer bevorzugten Ausführungsform der Erfindung werden die Hohlprofile aus Teilprofilen aus durch die stoffliche Zusammensetzung und/oder Farbgebung und/oder die Füllung und/oder die Bewehrung, z. B. eine Glasfaserbewehung unterschiedlichem Kunststoff zusammengesetzt. Es versteht sich, daß bei der Herstellung solcher Hohlprofile mit unterschiedlichen Extrudern für die Teilprofile und entsprechend mit unterschiedlichen Werkstoffen gearbeitet werden kann. Wichtig ist im Rahmen der Erfindung die beschriebene Abstimmung der Länge der Teilprofile. Handelt es sich bei den erfindungsgemäßen Hohlprofilen um solche, die durch eingeschobene Profile aus Metall ausgesteift sind, so kann die Abstimmung großzügiger erfolgen als bei selbsttragenden erfindungsgemäßen Hohlprofilen.

Grundsätzlich ist es bekannt (EP-A-0 317 861), zur Herstellung von Hohlprofilen von Profilhälften in Form von Halbschalen auszugehen, die über ein formgebendes Werkzeug geführt und im Bereich von abgewinkelten Flanschen miteinander stoffschlüssig verbunden werden. Dabei handelt es sich jedoch nicht um Hohlprofile aus thermoplastischem Kunststoff, bei denen die Teilprofile aus einem nach dem Kühldüsenextrusionsverfahren toleranzarm extrudierbaren Kunststoff bestehen und auch sind die Teilprofile nicht durch Kühldüsenextrusion hergestellt worden. Die Herstellung der bekannten Hohlprofile geht vielmehr von einer kontinuierlichen Zuführung offener Profile aus, wobei von Spulen bereitgestellte bandförmige Halbzeuge aus kunststoffimprägnierten Fasergebilden, sog. Prepreg-Bänder, hergestellt und diese wie angegeben verformt werden. Die Prepreg-Bänder bestehen aus Glasfasern u. dgl. und Epoxidharzsystemen in einem besonderen Polymerisationszustand. Ähnlich liegen die Verhältnisse bei einem anderen bekannten Verfahren (JP-A-56 115 237), bei dem die Teilquerschnitte mit längslaufenden Formschlußelementen extrudiert, gekühlt und in eine besondere Vorrichtung unter Verrastung der Formelemente vereinigt werden.

Das Kühldüsenextrusionsverfahren ist an sich bekannt (vgl. Michaeli "Extrusionswerkzeuge für Kunststoffe und Kautschuk" Hanser-Verlag 1991, S. 342 bis 345). Auf eine einfache Formel gebracht ist dieses Kühldüsenextrusionsverfahren dadurch gekennzeichnet, daß die formgebenden Düsen, die die Innenwand und die Außenwand der Hohlprofile definieren, gekühlt sind. Das bewirkt zunächst eine intensive Kühlung der Bereiche des Kunststoffstranges, der mit den gekühlten Werkzeugwänden in Kontakt kommt. Es entsteht gleichsam eine ausreichend standfeste Schale. Im Innern der Schale wird der noch fließfähige Kunststoff nachgedrückt. Auf diese Weise wird erreicht, daß die im Wege der Kühldüsenextrusion hergestellten Teilprofile sehr toleranzarm und mit hoher Oberflächenqualität das Werkzeug verlassen. Nachgeschaltete Kühl- oder Kalibrierungsmaßnahmen sind nicht erforderlich. Toleranzarm sind bei der Kühldüsenextrusion sowohl die Außenmaße als auch die Innenmaße als auch die Wanddicken, und zwar selbst bei sehr großen Wanddickenunterschieden in den einzelnen Wänden der Teilprofile. Allerdings muß mit besonderen Kunststoffen gearbeitet werden, nämlich mit solchen, die nach dem Kühldüsenextrusionsverfahren toleranzarm extrudierbar sind. Dazu kennt die Praxis die verschiedensten thermoplastischen Kunststoffe. Auch können praktisch alle bekannten thermoplastischen Kunststoffe durch Füllstoffe oder Bewehrungseinlagen in Form von langen oder kurzen Fasern, beispielsweise Glasfasern u. dgl., so eingestellt werden, daß sie im Rahmen des Kühldüsenextrusionsverfahrens sehr toleranzarm extrudiert werden.

Die Erfindung beruht auf der Erkenntnis, daß bei der Kühldüsenextrusion die angegebenen Toleranzen sehr genau eingehalten werden können. Zum Stand der Technik gehört es, die Teilprofile nach allen räumlichen Koordinaten miteinander unverschiebbar zu verbinden (vgl. DE-A-40 36 245), jedoch ist bisher nicht erkannt worden, daß beim Fügen besondere Maßnahmen erforderlich und möglich sind, um sicherzustellen, daß das Hohlprofil vollkommen gerade oder nach konstruktiven Vorgaben mit definiertem Krümmungsradius oder definierter Torsion verläuft. Die Erfindung hat erkannt, daß dieses durch die Abstimmungsregel erreicht werden kann, die darin besteht, die Länge der einzelnen Teilprofile vor der Vereinigung zum langgestreckten Hohlprofil so aufeinander abzustimmen, daß das langgestreckte Hohlprofil gerade oder mit vorgegebener Krümmung und/oder mit vorgegebener Torsion um die Hohlprofillängsachse verläuft. Es versteht sich, daß die Teilprofile im Rahmen der durchzuführenden Fügemaßnahmen entsprechend zuführbar, aber auch entsprechend verformbar und zu vereinigen sind. Ist ein Teilprofil länger als das beispielsweise auf der gegenüberliegenden Seite zugeordnete Teilprofil, so erreicht man eine Krümmung von diesem längeren Teilprofil weg. Durch Superposition der beschriebenen Maßnahmen kann eine vorgegebene Torsion erreicht werden.

Die vorstehend bereits angegebene Toleranzgrenze kann bei dem erfindungsgemäßen Verfahren unterschritten werden. Die Teilprofile können z. B. mit Teilprofilquerschnittstoleranzen in bezug auf alle Längenmaße der Teilprofilquerschnitte eingesetzt werden, die, angegeben in Millimetern, unter plus/minus (0,15 % plus/minus 0,02 mm) betragen.

Bei der Herstellung eines Hohlprofils nach dem erfindungsgemäßen Verfahren können die Fügebereiche auf verschiedene Weise eingerichtet werden. Nach bevorzugter Ausführungsform der Erfindung werden die Fügebereiche als Strangpreßfügebereiche gestaltet. Es versteht sich, daß nicht nur die Teilprofile toleranzarm hergestellt sind, sondern auch die Teilprofile toleranzarm gefügt werden. Das läßt sich mit den Hilfsmitteln der modernen Fügungstechnik unschwer verwirklichen, beispielsweise dadurch, daß nur extrem dünne Oberflächenschichten der Fügebereiche erwärmt und miteinander stoffschlüssig verbunden werden, oder auch dadurch, daß mit einem extrem dünnen Kleber gearbeitet wird, der auf die Fügebereiche aufgebracht wird.

Im Rahmen des erfindungsgemäßen Verfahrens können die Teilprofile in den Fügebereichen stoffschlüssig miteinander verbunden werden. Dabei besteht die Möglichkeit, die Teilprofile in den Fügebereichen formschlüssig und zusätzlich stoffschlüssig miteinander zu verbinden. Andererseits können die Teilprofile in den Fügebereichen auch adhäsiv miteinander verbunden werden. Insoweit liegt es im Rahmen der Erfindung, daß die Teilprofile in den Fügebereichen formschlüssig und zusätzlich adhäsiv miteinander verbunden werden.

Im Rahmen der Erfindung können die Teilprofile in den Fügebereichen auch mechanisch miteinander verbunden werden, nämlich mit Hilfe mechanischer Fügeelemente, wie z. B. Nieten, Stifte, Klammern und Klipse, oder durch mechanische Fügemaßnahmen, wie z. B. Prägen, Punzen. Auch liegt es im Rahmen der Erfindung, die Teilprofile in den Fügebereichen formschlüssig und zusätzlich mechanisch miteinander zu verbinden. Im übrigen können die vorstehend beschriebenen Fügemaßnahmen auch kombiniert werden.

Bei dem erfindungsgemäßen Verfahren kann der Kunststoff für die einzelnen Teilprofile in einem einzigen Extruder thermoplastifiziert und unterschiedlichen Kühldüsen zugeführt werden. Es besteht aber auch die Möglichkeit, den Kunststoff für die einzelnen Teilprofile in separaten Extrudern zu thermoplastifizieren und den Extrudern zugeordneten Kühldüsen zuzuführen.

Im Ergebnis ist zu bemerken, daß dieses auf sehr einfache Weise verwirklicht werden kann und zu Hohlprofilen führt, die in bezug auf die Toleranzen extremen Anforderungen genügen, und zwar sowohl in bezug auf die Außenmaße als auch in bezug auf die Innenmaße als auch in bezug auf Wände und Stege in den Hohlprofilen, selbst wenn diese und die Wände der Hohlprofile Wände sehr unterschiedlicher Wanddicke aufweisen. Gleichzeitig erreicht man in bezug auf die Außenoberfläche und in bezug auf die Innenoberfläche oder Innenoberflächen hohe Qualitäten.

Im folgenden wird das erfindungsgemäße Verfahren durch Verfahrensprodukte und Verfahrensmaßnahmen sowie eine Anlage zur Durchführung des Verfahrens anhand einer lediglich ein Ausführungsbeispiel darstellenden Zeichnung ausführlicher erläutert. Es zeigen in schematischer Darstellung
- Fig. 1: einen Querschnitt durch ein Hohlprofil,
- Fig. 2: eine Draufsicht auf den Gegenstand nach Fig. 1,
- Fig. 3: die beiden Teilprofile aus den Gegenständen der Fig. 1 und 2 vor der Fügung,
- Fig. 4: entsprechend der Fig. 3 zwei identische Teilprofile unterschiedlicher Länge,
- Fig. 5: eine Draufsicht auf das aus den Teilprofilen der Fig. 4 hergestellte Hohlprofil,
- Fig. 6: die schematische Darstellung einer Anlage für die Durchführung des erfindungsgemäßen Verfahrens, und
- Fig. 7: den vergrößerten Ausschnitt A aus dem Gegenstand der Fig. 6 mit geschnittener Kühldüse.

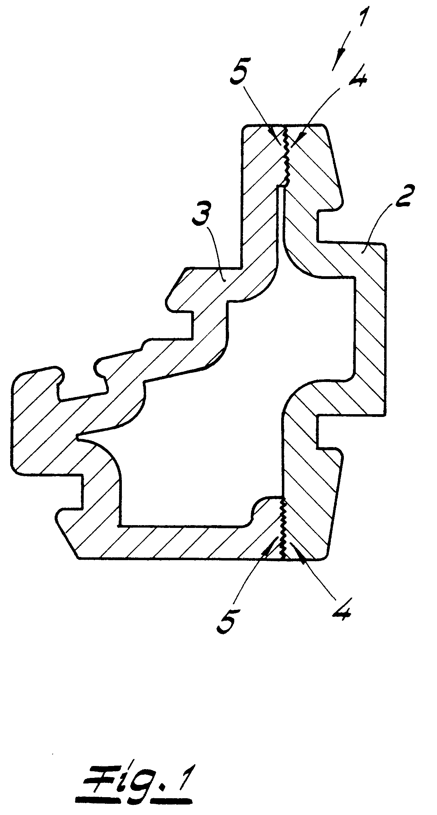

Die in den Fig. 1 bis 5 dargestellten Hohlprofile 1 bestehen aus thermoplastischem Kunststoff. Es handelt sich um langgestreckte Hohlprofile 1 einer vorgegebenen Länge. Der Hohlprofilquerschnitt ist über die gesamte Hohlprofillänge identisch.

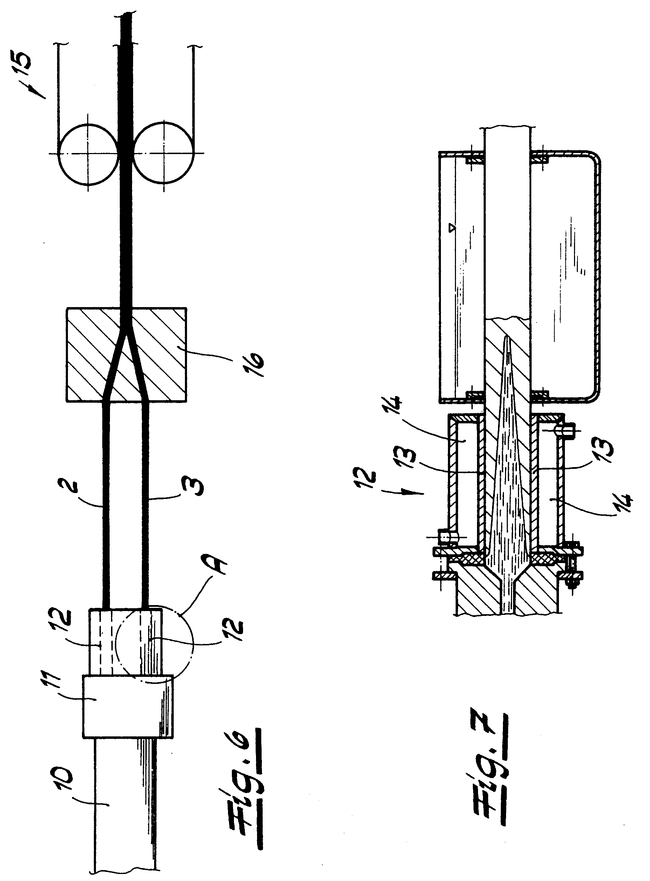

Aus einer vergleichenden Betrachtung der Fig. 1 bis 3 entnimmt man zunächst, daß die Hohlprofile 1 aus zwei Teilprofilen 2, 3 bestehen, die über die Hohlprofillänge konstanten Teilprofilquerschnitt sowie einander zugeordnete und zueinander komplementäre Fügebereiche 4, 5 aufweisen. Die Teilprofile 2, 3 bestehen aus einem besonderen Werkstoff, nämlich aus einem nach dem Kühldüsenextrusionsverfahren toleranzarm extrudierbaren Kunststoff. Die Toleranzarmut resultiert aus dem chemischen Aufbau des Kunststoffes und/oder daraus, daß der Kunststoff mit Füllern oder Bewehrungen in Form von Glasfasern o. dgl. versehen ist. Nimmt man die Fig. 6 und 7 hinzu, die weiter unten erläutert werden, so erkennt man, daß die Teilprofile 2, 3 durch Kühldüsenextrusion hergestellt worden sind. Das ist mit Toleranzen möglich, die extrem gering sind. In der Zeichnung ist aus Maßstabsgründen nicht erkennbar, daß die Toleranzen so klein sind, wie es der Patentanspruches 1 angibt.

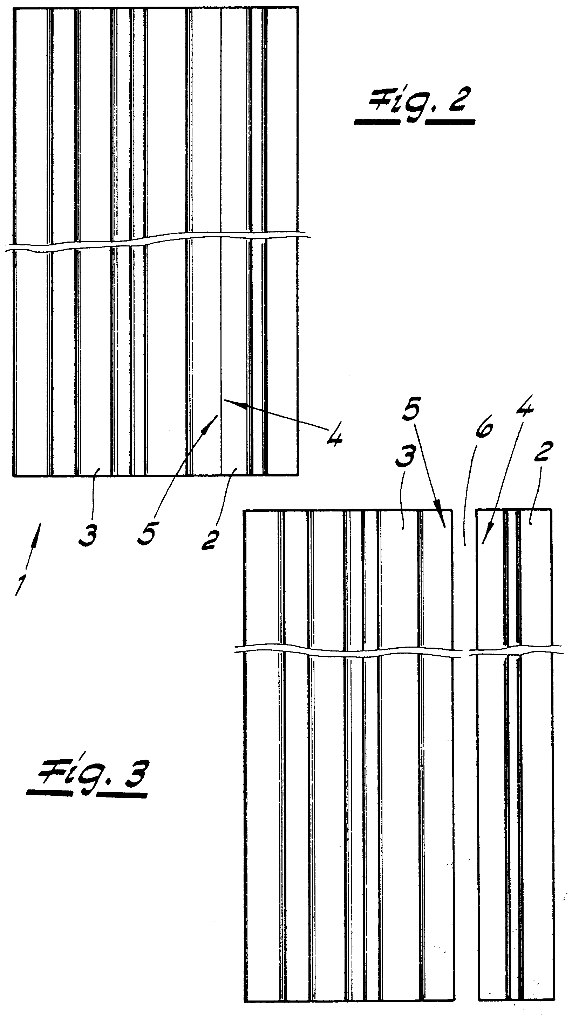

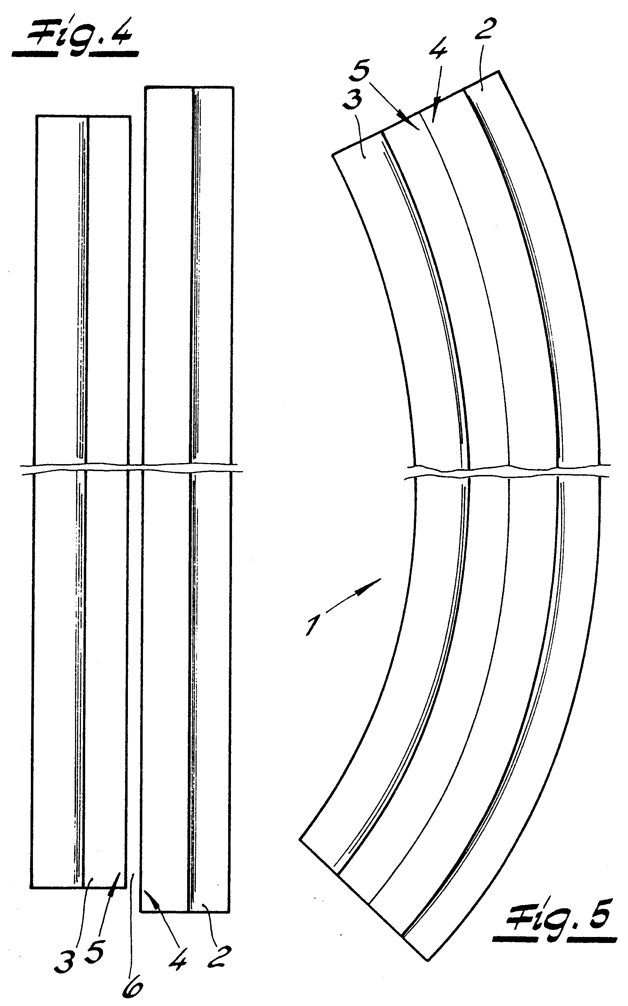

Die Teilprofile 2, 3 sind nach der Kühldüsenextrusion mit Hilfe der Fügebereiche 4, 5 in Längsrichtung des Hohlprofils sowie nach Maßgabe der beiden weiteren räumlichen Koordinaten gegeneinander unverschiebbar verbunden. Die Fig. 1 bis 5 erläutern, daß bei dem Hohlprofil 1 eine besondere Abstimmung erfolgt. Die Länge der einzelnen Teilprofile 2, 3 vor der Vereinigung zum langgestreckten Hohlprofil 1 ist nämlich so aufeinander abgestimmt, daß das langgestreckte Hohlprofil 1 gerade oder mit vorgebbarer Krümmung verläuft. Bezüglich der Abstimmung bei geradem Verlauf wird auf die Fig. 3 verwiesen. Hier erkennt man einen Spalt 6 zwischen den beiden Teilprofilen 2, 3, weil in Fig. 3 die Teilprofile 2, 3 noch nicht gefügt und miteinander verbunden sind. Man erkennt aber fernerhin am oberen und am unteren Ende des Bildes in Fig. 3, daß die Teilprofile 2, 3 genau gleich lang sind. Anders liegen die Verhältnisse bei den Fig. 4 und 5. Hier erkennt man wiederum in der Fig. 4 eine Draufsicht auf die beiden nicht miteinander vereinigten, mit Spalt 6 angeordneten Teilprofile 2, 3. Man erkennt, daß das Teilprofil 2, d. h. das rechte, beachtlich länger ist als das Teilprofil 3 links. Also kommt es durch die Fügung der beiden Teilprofile 2, 3 zu einem Hohlprofil 1 mit einer gewollten, aus der Längendifferenz resultierenden Krummung. Verändert man die Längendifferenzen über den Umfang des Hohlprofils 1, so kann auch eine definierte Torsion erreicht werden. Es versteht sich, daß auch die Krümmung nach allen drei räumlichen Koordinaten eingerichtet werden kann.

Die Querschnittsdarstellung in Fig. 1 macht deutlich, daß die einzelnen Teilprofile 2, 3 unterschiedliche Teilprofilquerschnitte aufweisen. Im übrigen sind in den Teilprofilen 2, 3 stark unterschiedliche Wanddicken verwirklicht. Die Teilprofile 2, 3 mögen aus dem gleichen Kunststoff bestehen, sie können aber auch aus unterschiedlichen Kunststoffen aufgebaut sein. Sie können mit Füllern, Bewehrungen in Form von Glasfasern u. dgl. versehen sein. Die Teilprofile 2, 3 können auch aus unterschiedlichen Werkstoffen bestehen, wobei die Unterschiede stofflich und/oder farblich gegeben sind oder aber die Teilprofile 2, 3 unterschiedliche Füllung oder Bewehrungen aufweisen.

Im Ausführungsbeispiel sind die Fügebereiche 4, 5 Strangpreßfügebereiche, weil die Teilprofile 2, 3 im Wege des Extrudierens hergestellt worden sind. Die Teilprofile 2, 3 mögen im Ausführungsbeispiel in der schon beschriebenen Art und Weise stoffschlüssig miteinander verbunden sein. Man könnte aber die Fügebereiche 4, 5 auch so verwirklichen, daß quer zur Längsrichtung ein Formschluß eingerichtet ist und zusätzlich eine stoffschlüssige oder eine adhäsive Verbindung bewirken. Nicht zeichnerisch dargestellt wurde, daß die Teilprofile 2, 3 auch mechanisch miteinander verbunden werden können, und zwar durch Nieten, Stifte, Klammern, Klipse, durch Prägen oder Punzen. Auch können die beschriebenen Maßnahmen kombiniert werden.

Betrachtet man die Fig. 6 und 7, so erkennt man zunächst einen Extruder 10 für die Thermoplastifizierung von thermoplastischem Kunststoff, der einen Werkzeugkopf 11 und im Werkzeugkopf 11 ein formgebendes Werkzeug mit Kühldüsen 12 aufweist. Die Kühlung erfolgt beispielsweise durch Wasser, wozu auf die Fig. 7 verwiesen wird. Man erkennt hier die formgebenden Düsenwände 13 und die Strömungskanäle 14 für das Kühlwasser. Angeschlossen ist mit einigem Abstand eine Abzugsvorrichtung 15. Dazwischen befindet sich eine Fügeeinrichtung 16 oder Fügemaschine.

Das Hohlprofil 1, welches auf der dargestellten Anlage herstellbar ist, wird aus zumindest zwei Teilprofilen 2, 3 zusammengesetzt. Es mag sich dabei um Teilprofile 2, 3 handeln, wie sie in den Fig. 1 bis 5 dargestellt worden sind. Die Teilprofile 2, 3 haben konstanten Teilprofilquerschnitt. Sie besitzen einander zugeordnete und zueinander komplementäre Fügebereiche 4, 5. Für die Herstellung der Teilprofile 2, 3 wird ein nach dem Kühldüsenextrusionsverfahren toleranzarm extrudierbarer Kunststoff verwendet. Die Teilprofile 2, 3 werden nach dem Kühldüsenextrusionsverfahren sehr toleranzarm hergestellt. Das Kühldüsenextrusionsverfahren wird so geführt, daß die Teilprofilquerschnitte Teilprofilquerschnittstoleranzen aufweisen, die unter der angegebenen oberen Grenze liegen. Man erkennt in der Fig. 6, daß die Teilprofile 2, 3, die gleichzeitig mit Hilfe der Kühldüsenextrusion hergestellt worden sind, im Anschluß daran zum Hohlprofil 1 gefügt, nämlich entsprechend zusammengeführt werden, wobei dabei oder danach in Längsrichtung des Hohlprofils 1 sowie nach Maßgabe der beiden weiteren räumlichen Koordinaten durch Stoffschluß und/oder Adhäsion und/oder Formschluß der Verbund hergestellt wird. Das alles mag auch unter Anwendung von Druck und Wärme in den Fügebereichen erfolgen. Man erkennt, daß das durch den Verbund der Teilprofile 2, 3 hergestellte Hohlprofil 1 einer Abzugseinrichtung 15 zugeführt und mit dieser als ganzes abgezogen wird.

In bezug auf die Maßnahme, daß die Länge der einzelnen Teilprofile 2, 3 durch Einflußnahme auf die Extrusionsgeschwindigkeit für die einzelnen Teilprofile 2, 3 bei der Kühlkammerextrusion abgestimmt wird, wird auf die Fig. 2 und 3 bzw. 4 und 5 verwiesen. Man erkennt, daß sowohl extrem gerade Hohlprofile 1 als auch gekrümmte Hohlprofile 1 hergestellt werden können. Das gilt auch in bezug auf tordierte Hohlprofile 1, was jedoch nicht gezeichnet wurde.

In der Fig. 6 wird der Kunststoff für die einzelnen Teilprofile 2, 3 in einem einzigen Extruder 10 thermoplastifiziert und den unterschiedlichen Kühldüsen 12 zugeführt. Es könnten aber auch zwei Extruder für die Thermoplastifizierung unterschiedlicher Kunststoffe eingerichtet sein.

## Patentansprüche

1. Verfahren zur kontinuierlichen Herstellung eines langgestreckten Hohlprofiles aus thermoplastischem Kunststoff mit über die Hohlprofillänge konstantem Hohlprofilquerschnitt, wobei
a) das Hohlprofil aus zumindest zwei Teilprofilen, die über die Hohlprofillänge konstanten Teilprofilquerschnitt sowie einander zugeordnete und zueinander komplementäre Fügebereiche aufweisen, zusammengesetzt wird, gekennzeichnet durch folgende weitere Schritte:
b) für die Herstellung der Teilprofile wird ein nach dem Kühldüsenextrusionsverfahren toleranzarm extrudierbarer Kunststoff verwendet,
c) das Kühldüsenextrusionsverfahren wird so geführt, daß die Teilprofile Teilprofilquerschnittstoleranzen in bezug auf alle Längenmaße der Teilprofilquerschnitte, angegeben in Millimetern, von unter plus/minus 0,2 % aufweisen,
d) die Teilprofile werden gleichzeitig mit Hilfe der Kühldüsenextrusion hergestellt sowie im Anschluß daran zum Hohlprofil gefügt und dabei oder danach in Längsrichtung des Hohlprofils sowie nach Maßgabe der beiden weiteren räumlichen Koordinaten gegeneinander durch Stoffschluß und/oder Adhäsion und/oder Formschluß unverschiebbar verbunden,
e) das durch den Verbund der Teilprofile hergestellte Hohlprofil wird einer Abzugseinrichtung zugeführt und mit dieser als ganzes abgezogen,
wobei die Länge der einzelnen Teilprofile durch Einflußnahme auf die Extrusionsgeschwindigkeit für die einzelnen Teilprofile bei der Kühldüsenextrusion so abgestimmt wird, daß ein langgestrecktes Hohlprofil gerade oder mit vorgegebener Krümmung und/oder mit vorgegebener Torsion um die Hohlprofillängsachse abgezogen wird, wobei die Abzugseinrichtung entsprechend eingerichtet wird.

2. Verfahren nach Anspruch 1, wobei das Hohlprofil aus Teilprofilen mit unterschiedlichem Teilprofilquerschnitt zusammengesetzt wird.

3. Verfahren nach einem der Ansprüche 1 oder 2, wobei das Hohlprofil aus Teilprofilen aus dem gleichen Kunststoff zusammengesetzt wird.

4. Verfahren nach einem der Ansprüche 1 oder 2, wobei das Hohlprofil aus Teilprofilen aus durch die stoffliche Zusammensetzung und/oder die Farbgebung und/oder die Füllung und/oder eine Bewehrung unterschiedlichem Kunststoff zusammengesetzt wird.

5. Verfahren nach einem der Ansprüche 1 bis 4, wobei die Fügebereiche als Strangpreßfügebereiche gestaltet werden.

6. Verfahren nach einem der Ansprüche 1 bis 5, wobei die Teilprofile in den Fügebereichen stoffschlüssig miteinander verbunden werden.

7. Verfahren nach einem der Ansprüche 1 bis 5, wobei die Teilprofile in den Fügebereichen formschlüssig und zusätzlich stoffschlüssig miteinander verbunden werden.

8. Verfahren nach einem der Ansprüche 1 bis 5, wobei die Teilprofile in den Fügebereichen adhäsiv miteinander verbunden werden.

9. Verfahren nach einem der Ansprüche 1 bis 5, wobei die Teilprofile in den Fügebereichen formschlüssig und zusätzlich adhäsiv miteinander verbunden werden.

10. Verfahren nach einem der Ansprüche 1 bis 5, wobei die Teilprofile in den Fügebereichen mit Hilfe mechanischer Fügeelemente miteinander verbunden werden.

11. Verfahren nach einem der Ansprüche 1 bis 5, wobei die Teilprofile in den Fügebereichen formschlüssig und zusätzlich mechanisch verbunden werden.

12. Verfahren nach einem der Ansprüche 1 bis 11, wobei der Kunststoff für die einzelnen Teilprofile in einem einzigen Extruder thermoplastifiziert und unterschiedlichen Kühldüsen zugeführt wird.

## Claims

1. A method for the continuous production of an elongate hollow profile from thermoplastic material having a constant hollow profile cross-section over the hollow profile length, wherein
a) the hollow profile is composed of at least two part-profiles which have a constant part profile cross-section over the hollow profile length and joint zones which are associated with one another and are complementary to one another, characterised by the following additional steps:
b) an extrudable plastic which by the cooled die extrusion process meets strict tolerances is used for the production of the part-profiles,
c) the cooled die extrusion process is carried out in such manner that the part-profiles have part-profile cross-section tolerances, with respect to all the longitudinal dimensions of the part-profile cross-sections, indicated in millimetres, of less than ± 0.2%,
d) the part-profiles are manufactured simultaneously by cooled die extrusion and following this are joined to form the hollow profile and at the same time or thereafter are immovably joined in the longitudinal direction of the hollow profile and in accordance with the other two spatial coordinates, by material connection and/or adhesion and/or positive connection,
e) the hollow profile produced by joining the part-profiles is fed to a take-off device and is taken off as a unit with the latter,
wherein the length of the individual part-profiles is so adapted, by controlling the extrusion speed for the individual part-profiles during the cooled die extrusion, that an elongate hollow profile is taken off straight or with a predetermined curvature and/or with a predetermined torsion about the hollow profile longitudinal axis, the take-off device being arranged accordingly.

2. A method according to claim 1, wherein the hollow profile is made up of part-profiles having different part-profile cross-sections.

3. A method according to claim 1 or 2, wherein the hollow profile is made up of part-profiles made from the same plastic.

4. A method according to claim 1 or 2, wherein the hollow profile is made up of part-profiles made from plastic differing in respect of the material composition and/or colouring and/or filling and/or reinforcement.

5. A method according to any one of claims 1 to 4, wherein the joint zones are in the form of extrusion joint zones.

6. A method according to any one of claims 1 to 5, wherein the part-profiles are joined by material connection in the joint zones.

7. A method according to any one of claims 1 to 5, wherein the part-profiles are interconnected positively and additionally by material connection in the joint zones.

8. A method according to any one of claims 1 to 5, wherein the part-profiles are interconnected by adhesion in the joint zones.

9. A method according to any one of claims 1 to 5, wherein the part-profiles are interconnected positively and additionally by adhesion in the joint zones.

10. A method according to any one of claims 1 to 5, wherein the part-profiles are interconnected by mechanical jointing elements in the joint zones.

11. A method according to an one of claims 1 to 5, wherein the part-profiles are connected positively and additionally mechanically in the joint zones.

12. A method according to any one of claims 1 to 11, wherein the plastic for the individual part-profiles is thermoplasticised in a single extruder and fed to different cooled dies.

## Revendications

1. Procédé de fabrication continue d'un profilé creux allongé en matière thermoplastique à section transversale constante sur toute sa longueur,
a) le profilé creux étant constitué d'au moins deux profilés partiels qui présentent une section transversale constante sur toute la longueur du profilé creux ainsi que des zones de joint associées et complémentaires les unes aux autres, caractérisé par les autres étapes suivantes :
b) la matière plastique employée pour fabriquer les profilés partiels est extrudable avec des tolérances faibles selon le procédé d'extrusion à filière refroidie,
c) le procédé d'extrusion à filière refroidie est conduit de façon que les profilés partiels présentent des tolérances de section transversale, indiquées en millimètres, inférieures à plus/moins 0,2 % par rapport à toutes les cotes de section transversale des profilés partiels,
d) les profilés partiels sont fabriqués simultanément par extrusion à filière refroidie et assemblés ensuite sous la forme d'un profilé creux et, en même temps ou après, sont reliés sans possibilité de translation l'un par rapport à l'autre, dans le sens longitudinal du profilé creux et suivant les deux autres coordonnées spatiales, par conjugaison de matière et/ou par adhérence et/ou par conjugaison de formes,
e) le profilé creux fabriqué par assemblage des profilés partiels est transmis à un dispositif de tirage et est entièrement tiré par celui-ci,
la longueur des différents profilés partiels étant modulée en jouant sur la vitesse d'extrusion des différents profilés partiels lors de l'extrusion à filière refroidie, de façon à tirer un profilé creux allongé rectiligne ou avec une courbure prédéfinie et/ou avec une torsion prédéfinie selon son axe longitudinal, le dispositif de tirage étant aménagé en conséquence.

2. Procédé selon la revendication 1, dans lequel le profilé creux est constitué de profilés partiels dont la section transversale est différente.

3. Procédé selon l'une des revendications 1 ou 2, dans lequel le profilé creux est constitué de profilés partiels réalisés dans la même matière plastique.

4. Procédé selon l'une des revendications 1 ou 2, dans lequel le profilé creux est constitué de profilés partiels réalisés dans des matières plastiques qui diffèrent par la composition et/ou la coloration et/ou la charge et/ou la présence d'une armature.

5. Procédé selon l'une des revendications 1 à 4, dans lequel les zones de joint sont conçues sous la forme de zones de joint extrudées.

6. Procédé selon l'une des revendications 1 à 5, dans lequel les profilés partiels sont reliés entre eux par conjugaison de matière dans les zones de joint.

7. Procédé selon l'une des revendications 1 à 5, dans lequel les profilés partiels sont reliés entre eux par conjugaison de formes et en plus par conjugaison de matière dans les zones de joint.

8. Procédé selon l'une des revendications 1 à 5, dans lequel les profilés partiels sont reliés entre eux par adhérence dans les zones de joint.

9. Procédé selon l'une des revendications 1 à 5, dans lequel les profilés partiels sont reliés entre eux par conjugaison de formes et en plus par adhérence dans les zones de joint.

10. Procédé selon l'une des revendications 1 à 5, dans lequel les profilés partiels sont reliés entre eux à l'aide d'éléments d'assemblage mécaniques dans les zones de joint.

11. Procédé selon l'une des revendications 1 à 5, dans lequel les profilés partiels sont reliés par conjugaison de formes et en plus mécaniquement dans les zones de joint.

12. Procédé selon l'une des revendications 1 à 11, dans lequel la matière plastique des différents profilés partiels est thermoplastifiée dans une seule extrudeuse et transmise à différentes filières refroidies.
